# EUROPÄISCHE PATENTSCHRIFT

(11) **EP 0 459 168 B1**
(45) Veröffentlichungstag und Bekanntmachung des Hinweises auf die Patenterteilung: **05.04.1995**
(21) Anmeldenummer: 91107074.6
(22) Anmeldetag: 02.05.1991
(51) Int. Cl.: C08G 14/02

(54) **Kondensationsprodukte aus Phenolmonosulfonsäuren, Dihydroxydiphenylsulfonen, Harnstoff und Formaldehyd**
Condensation products of hydroxybenzenemonosulfonic acids, dihydroxydiphenylsulfones, urea and formaldehyde
Produits de condensation d'acides hydroxybenzène monosulfoniques, de dihydroxydiphénylsulfones, d'urée et de formaldéhyde

(30) Priorität: 10.05.1990 DE 4014977
(43) Veröffentlichungstag der Anmeldung: 04.12.1991
(73) Patentinhaber: BASF Aktiengesellschaft, 67063 Ludwigshafen (DE)
(72) Erfinder: Graf, Hermann, Dr., W-6704 Mutterstadt (DE); Stuebinger, Adolf, Dr., W-6710 Frankenthal (DE); Lorenz, Klaus, Dr., W-6520 Worms 1 (DE); Schaffer, Ortwin, Dr., W-6700 Ludwigshafen (DE); Stork, Karl, Dr., W-6719 Carlsberg (DE)

(56) Entgegenhaltungen:
- DE-B- 1 113 457
- FR-A- 2 250 778
- GB-A- 1 137 785

## Beschreibung

Die vorliegende Erfindung betrifft Kondensationsprodukte aus Phenolmonosulfonsäuren, Dihydroxydiphenylsulfonen, Harnstoff und Formaldehyd, dadurch erhältlich, daß man
A) in Schwefelsäure aus Phenolmonosulfonsäuren und Dihydroxydiphenylsulfonen im molaren Verhältnis von 3:1 bis 10:1, mit der Maßgabe, daß das Gemisch, bezogen auf das Gesamtgewicht der Komponenten, höchstens 10 Gew.-% Wasser und pro Mol Dihydroxydiphenylsulfon 0,3 bis 1,5 Mol Schwefelsäure enthält, bei 100 bis 180°C eine homogene Reaktionsmasse zubereitet,
B) anschließend bei 40 bis 90°C pro Mol vorhandener Phenoleinheiten mit 1 bis 2 Mol Formaldehyd und 0,5 bis 1,5 Mol Harnstoff in wäßrigem Medium vorkondensiert,
C) das Reaktionsgemisch teilneutralisiert,
D) das teilneutralisierte Reaktionsgemisch pro Mol vorhandener Phenoleinheiten mit 0 bis 0,5 Mol Phenol und pro Mol der danach vorhandenen Phenoleinheiten mit 0,1 bis 0,8 Mol Formaldehyd versetzt,
E) bei 40 bis 90°C nachkondensiert,
F) den pH-Wert des Reaktionsgemisches in den neutralen Bereich verschiebt und
G) anschließend mit einer schwachen Säure ansäuert.

Außerdem betrifft die vorliegende Erfindung Verfahren zur Herstellung dieser Kondensationsprodukte sowie ihre Verwendung als Mittel zum Gerben von Tierhäuten.

Die DE-B 1 113457 betrifft Kondensationsprodukte, die durch Umsetzung von sulfonierten Phenolen, die frei von kondensierten Ringsystemen sind, mit Harnstoff und Formaldehyd und Nachbehandlung der erhaltenen Kondensate mit Phenolen und Formaldehyd erhältlich sind. Diese Kondensationsprodukte werden insbesondere als Mittel zum Gerben von Tierhäuten zur Herstellung lichtechter Leder von heller Farbe (hohem Weißeffekt) empfohlen. Nachteilig an diesen Mitteln zum Gerben von Tierhäuten ist jedoch, daß die Lichtechtheit der gegerbten Tierhäute nicht voll zu befriedigen vermag.

Die US-4, 592, 940 betrifft Kondensationsprodukte, die durch Umsetzung von Formaldehyd mit Diphenylsulfonen und Phenolsulfonsäuren erhältlich sind. Nachteilig an diesen Kondensationsprodukten ist, daß bei ihrer Verwendung als Mittel zum Gerben von Tierhäuten, die Fülle der erhaltenen Leder nicht voll zu befriedigen vermag.

Der vorliegenden Erfindung lag daher die Aufgabe zugrunde, als Gerbstoffe geeignete synthetische aromatische Kondensationsprodukte (aromatische Synthane) zur Verfügung zu stellen, die insbesondere zur Herstellung von weißen Ledern mit erhöhter Lichtechtheit und erhöhter Fülle geeignet sind.

Demgemäß wurden die eingangs definierten Kondensationsprodukte gefunden.

In der Reaktionsstufe A werden als Phenolmonosulfonsäuren vorzugsweise reine p-Phenolmonosulfonsäure oder Mischungen aus p- und o-Phenolsulfonsäure mit einem Gehalt an o-Phenolsulfonsäure von bis zu 20 Gew.-%, bezogen auf die Mischung, eingesetzt und als Dihydroxydiphenylsulfone kommen vor allem reines 4,4'-Dihydroxydiphenylsulfon sowie Mischungen aus 4,4'- und 2,4'-Dihydroxydiphenylsulfon mit einem Gehalt an 2,4'-Dihydroxydiphenylsulfon von bis zu 20 Gew.-%, bezogen auf die Mischung, in Betracht. Das molare Verhältnis von Phenolmonosulfonsäuren zu Dihydroxydiphenylsulfonen liegt vorzugsweise im Bereich von 3,5:1 bis 5:1, besonders bevorzugt im Bereich von 4:1 bis 4,5:1, und pro Mol Dihydroxydiphenylsulfon werden mit Vorteil 0,5 bis 1 Mol Schwefelsäure eingesetzt.

Die Temperatur in der Stufe A beträgt in anwendungstechnisch vorteilhafter Weise 120 bis 160°C, wohingegen in der Stufe B vorzugsweise bei Temperaturen von 50 bis 60°C umgesetzt wird. Pro Mol vorhandener Phenoleinheiten wird in der Stufe B eine Zugabe an Harnstoff von 0,6 bis 1 Mol, insbesondere von 0,8 bis 1 Mol bevorzugt, während die in gleicher Weise bezogene Menge Formaldehyd vorzugsweise 1,4 bis 1,8 Mol und besonders bevorzugt 1,6 bis 1,8 Mol beträgt. Zweckmäßigerweise wird das Formaldehyd in der Stufe B als 30 gew.-%ige wäßrige Lösung zugesetzt. Darüber hinaus wird in vorteilhafter Weise die Menge Wasser zugegeben, die erforderlich ist, um die zugegebene Harnstoffmenge bei Normalbedingungen in Wasser zu lösen. Vorzugsweise erfolgt die Formaldehydzugabe nach der Zugabe von Harnstoff und Wasser. Die Kondensationsdauer sollte nicht weniger als 0,5 und nicht mehr als 3 h dauern. Besonders vorteilhaft erweist sich eine Reaktionszeit von 2 bis 2,5 h.

Die pro Mol vorhandener Phenoleinheiten in der Stufe D zugegebene Menge an Formaldehyd beträgt vorzugsweise 0,1 bis 0,4 Mol und besonders bevorzugt 0,1 bis 0,3 Mol. Um Gerbstoffe für Leder mit besonders hoher Lichtechtheit zu erhalten, wird in der Stufe D kein Phenol mitverwendet. Die Mitverwendung von Phenol in der Stufe D ist jedoch dann besonders vorteilhaft, wenn Gerbstoffe erwünscht sind, die einerseits Leder mit erhöhter Lichtechtheit und Fülle und andererseits Leder mit vorteilhaften mechanischen Eigenschaften, z.B. erhöhter Festnarbigkeit, ergeben. In diesem Fall beträgt die pro Mol vorhandener Phenoleinheiten zugesetzte Menge Phenol vorzugsweise 0,2 bis 0,4 Mol. Zweckmäßigerweise geht die Phenolzugabe der Formaldehydzugabe voraus.

In der Stufe E wird für den Fall, daß in der Stufe D kein Phenol zugesetzt worden ist, bevorzugt so lange nachkondensiert, bis die dynamische Viskosität η der Reaktionsmischung (gemessen bei 50°C mit einem Rotationsviskosimeter der Fa. Brookfield, Typ LVT, Spindelnummer LV2, bei einer Geschwindigkeit von 12 Umdrehungen/min, gegen ein 400 ml Becherglas mit 80 mm Durchmesser) einen Wert von 300 bis 350 mPa·s erreicht hat. Wird in der Stufe D Phenol zugesetzt, erhöht sich dieser Wert je nach zugegebener Phenolmenge auf 1000 bis 4000 mPa·s. Es können so Rest-Phenol-Gehalte <0,1 Gew.-% und Restgehalte an freiem Formaldehyd <0,05 Gew.-%, bezogen auf den Feststoffanteil, erzielt werden. Vorzugsweise wird bei 50 bis 60°C nachkondensiert.

Die Teilneutralisation in der Stufe C erfolgt ebenso wie die pH-Verschiebung in der Stufe F durch Zugabe basischer Mittel, wobei Alkalimetallhydroxide wie NaOH sowie Ammoniak, üblicherweise als wäßrige Lösung, bevorzugt verwendet werden. In vorteilhafter Weise wird der pH-Wert bei der Teilneutralisation soweit erhöht, daß pro Gramm Reaktionsgemisch die Zugabe von 0,05 bis 0,08 g Natriumhydroxid eine weitere Erhöhung des pH auf einen Wert von 7 bewirken würde. Die pH-Verschiebung in der Stufe F erfolgt vorzugsweise in den Bereich pH 6 bis pH 8 und besonders bevorzugt in den Bereich pH 7 bis 7,5.

Anschließend wird in der Stufe G der pH-Wert durch Zugabe schwacher Säuren (in der Regel als wäßrige Lösung), vorzugsweise auf Werte von 3 bis 4, reduziert.

Diesbezüglich geeignete schwache Säuren sind u.a. Essigsäure, Ameisensäure, Oxalsäure, Bernsteinsäure, Glutarsäure, Adipinsäure oder Citronensäure. Besonders vorteilhaft ist die Verwendung von in Wasser löslichen hochmolekularen vollsauren oder teilneutralisierten, z.B. mit Alkalimetallhydroxiden, Polycarbonsäuren. Beispiele hierfür sind polymere Polycarbonsäuren wie Homo- oder Copolymerisate von 3 bis 6 C-Atome enthaltenden α,β-monoethylenisch ungesättigten Carbonsäuren wie Acryl- und Methacrylsäure, die vorzugsweise ein gewichtsmittleres Molekulargewicht von 1500 bis 15000 aufweisen. Geeignete Comonomere sind u.a. Acrylnitril, Methacrylnitril, Ester der Acryl- oder Methacrylsäure mit 1 bis 10 C-Atome enthaltenden Alkanolen, Acrylamid, Methacrylamid, Styrol oder Methylvinylether. Der Anteil der Carboxylgruppen enthaltenden Monomeren sollte, bezogen auf die Gesamtmenge der das Copolymerisat konsituierenden Monomeren, in der Regel wenigstens 20 Mol-% betragen. Als Carboxylgruppen enthaltende Monomere kommen auch monoethylenisch ungesättigte Säureanhydride wie Maleinsäureanhydrid in Betracht. Bezogen auf die Trockenmasse des Reaktionsgemisches werden die hochmolekularen vollsauren oder teilneutralisierten Polycarbonsäuren vorzugsweise in Mengen von 1 bis 5 Gew.-% zugesetzt.

Erfolgt in der Stufe D eine Zugabe von Phenol, ist es in der Regel zur Vermeidung eines zu hohen Kondensationsgrades aufgrund der normalerweise sehr rasch ablaufenden Kondensationsreaktion (10 bis 20 min) im technischen Maßstab zweckmäßig, die Stufen D bis F miteinander zu verschmelzen und kaskadenförmig zu arbeiten. D.h. nach erfolgter Zugabe des Phenols wird nur eine Teilmenge Formaldehyd zugesetzt, das System unter Rühren bei 40 bis 90°C kurze Zeit sich selbst überlassen, dann wird der pH etwas erhöht, weiteres Formaldehyd zugegeben etc., bis die gewünschte Viskosität erreicht ist. Selbstverständlich kann auch in Abwesenheit einer Phenolzugabe in dieser Weise kaskadenförmig gearbeitet werden.

Die Stufe A wird in anwendungstechnisch vorteilhafter Weise so realisiert, daß man Phenol mit konzentrierter Schwefelsäure, vorzugsweise 96 gew.-%ig, und/oder Oleum eines SO₃-Gehaltes von 20 bis 65 Gew.-% bei 100 bis 180°C 1 bis 10, vorzugsweise 3 bis 6 h erhitzt, wobei das Molverhältnis von Phenol zu Schwefelgesamtsäure (gerechnet als Schwefeltrioxid) 1 bis 1,2:1, vorzugsweise 1:1, beträgt. Hierbei werden die Phenolmonosulfonsäuren und die Dihydroxydiphenylsulfone in situ gebildet. Darüber hinaus in untergeordneten Mengen gebildete Nebenprodukte sind bezüglich der weiteren Reaktionsstufen B bis G im allgemeinen nicht störend und wirken sich überlicherweise auf die Produktqualität nicht nachteilig aus.

Die genaue Zusammensetzung der Reaktionsmischung kann z.B. durch Hochdruckflüssigchromatographie ermittelt werden. Ein gegebenenfalls festgestellter Mangel an Dihydroxydiphenylsulfonen kann behoben werden, indem man die entsprechende Menge extern zufügt und nochmals bei 100 bis 180°C bis zum Erreichen einer homogenen Mischung rührt. Die Menge an in situ gebildeten Dihydroxydiphenylsulfonen wird insbesondere durch die Reaktionstemperatur sowie durch den Gehalt der Reaktionsmischung an SO₃ beeinflußt. Vorzugsweise wird daher mit Oleum eines SO₃-Gehaltes von 20 bis 32 Gew.-% bei Temperaturen von 150 bis 180°C umgesetzt. Zur Herstellung der auf 100 bis 180°C zu erhitzenden Mischung aus Phenol und konzentrierter Schwefelsäure und/oder Oleum werden zweckmäßigerweise die Säuren kontinuierlich in auf ca. 60°C erwärmtes Phenol getropft, wobei eine Erwärmung auf ca. 90 bis 100°C erfolgt.

Den so erhältlichen wäßrigen Gemischen der neuen Kondensationsprodukte können je nach Bedarf untergeordnete Mengen zusätzlicher Hilfsmittel wie mehrwertige Metallionen komplexierende Mittel, z.B. die Alkalimetallsalze der Ethylendiamintetraessigsäure oder der Nitrilotriessigsäure oder Natriumpolyphosphate, zugesetzt werden. Auch kann ihr Wassergehalt nach Bedarf modifiziert werden. Sie eignen sich insbesondere zum Gerben von Tierhäuten, wobei Leder mit hohem Weißeffekt, erhöhter Lichtechtheit und erhöhter Fülle erhalten werden. Darüber hinaus zeigen die so erhältlichen Leder eine erhöhte Wärmebeständigkeit, voll befriedigende Weichheit sowie eine ausgezeichnete Färbbarkeit. Die neuen Kondensationsprodukte können ferner in vorteilhafter Weise zur Weißnachgerbung von Ledern aller Art, z.B. von Chrom gegerbten Tierhäuten, verwendet werden. Es werden dabei ausgezeichnete Leder von sehr heller Farbe und vorzüglicher Lichtechtheit erhalten. Hervorzuheben ist auch die gute Verträglichkeit der neuen Kondensationsprodukte mit anderen Gerbmitteln, was ihre Verwendung in Gerbstoffmischungen ermöglicht, z.B. in wäßriger Lösung gemeinsam mit Chrom, Aluminium-, Eisen- oder Zirkoniumgerbsalzen oder deren Gemischen.

Die erfindungsgemäßen wäßrigen Gemische der neuen Kondensationsprodukte sind temperaturbeständig und ausgezeichnet lagerfähig. Sie lassen sich ohne Minderung ihrer wertvollen Eigenschaften durch bekannte Trocknungsverfahren wie Eindampfen im Vakuum oder Walzen- oder Sprühtrocknung in die fest Form überführen. Vorzugsweise wird sprühgetrocknet, wobei die Eingangstemperatur zweckmäßigerweise 230 und die Ausgangstemperatur zweckmäßigerweise 105°C beträgt. Die Gerbung erfolgt aus wäßriger Lösung. Diese enthält vorzugsweise 20 bis 30 Gew.-%, bezogen auf das Blößengewicht, an erfindungsgemäßen Kondensationsprodukten und im Falle von Nachgerbungen vorteilhaft 3 bis 20 Gew.-%, bezogen auf die vorgegerbte Tierhaut.

### Beispiele

### Beispiel 1

### Herstellung von erfindungemäßen Kondensationsprodukten K1 bis K12

K1 197 g auf 60°C erwärmtes Phenol wurden innerhalb von 0,5 h kontinuierlich mit 186 g Oleum (24 Gew.-% SO₃) versetzt und die erhaltene Mischung 3,5 h auf 160°C erhitzt. Anschließend wurden bei 80°C zunächst 80 g Wasser und 109 g Harnstoff eingerührt und danach während 2 h 288 g einer 30 gew.-%igen wäßrigen Formaldehydlösung kontinuierlich zugegeben. Das erhaltene Gemisch wurde mit 42 g 50 gew.-%iger Natronlauge versetzt. Danach wurden bei 55°C zunächst 50,5 g Phenol eingerührt, dann 41 g einer 30 gew.-%igen wäßrigen Formaldehydlösung zugesetzt und die Reaktionsmischung 10 min bei 55°C gehalten. Anschließend wurde der pH-Wert durch Zugabe von 100 g 50 gew.-%iger Natronlauge zunächst in den Bereich 7,3 bis 7,5 verschoben und danach durch Zugabe einer Lösung von 70 g eines Bernstein-, Glutar- und Adipinsäure im Gewichtsverhältnis 1:1:1 enthaltenden Gemisches in 100 g Wasser auf 3,7 reduziert. Nach Zugabe von 2 g des Natriumsalzes der Ethylendiamintetraessigsäure wurde die erhaltene Mischung sprühgetrocknet.
K2 376 g auf 60°C erwärmtes Phenol wurden kontinuierlich mit 372 g Oleum (24 Gew.-% SO₃) versetzt und die erhaltene Mischung 3 h auf 170°C erhitzt. Anschließend wurden bei 80°C zunächst 170 g Wasser und 238 g Harnstoff eingerührt und danach während 2 h 627 g einer 30 gew.-%igen wäßrigen Formaldehydlösung zugegeben. Das erhaltene Gemisch wurde mit 70 g 50 gew.-%iger Natronlauge versetzt. Danach wurden bei 55°C zunächst 110 g Phenol eingerührt, dann 90 g einer 30 gew.-%igen wäßrigen Formaldehydlösung zugegeben und die Reaktionsmischung 10 min bei 55°C gehalten. Anschließend wurde der pH-wert durch Zugabe von 250 g 50 gew.-%iger Natronlauge zunächst auf 7,3 eingestellt und danach durch Zugabe von gleichen Gew.-Teilen eines Bernstein-, Glutar- und Adipinsäure im Gewichtsverhältnis 1:1:1 enthaltenden Gemisches und einer 50 gew.-%igen wäßrigen Lösung einer Polyacrylsäure eines gewichtsmittleren Molekulargewichtes von 2500 auf 3,5 reduziert. Nach Zugabe von 5 g des Natriumsalzes der Ethylendiamintetraessigsäure wurde das erhaltene Gemisch sprühgetrocknet.
K3 Wie K2, jedoch wurden nach der Zugabe der 110 g Phenol zunächst nur 45 g wäßrige Formaldehydlösung zugegeben. 5 min darauf wurde der pH-Wert durch Zugabe von 150 g 50 gew.-%iger Natronlauge angehoben und dann die verbliebenen 45 g der wäßrigen Formaldehydlösung zugegeben. Nach dem Verschwinden des Phenolgeruchs wurden 100 g 50 gew.-%iger Natronlauge zugesetzt und danach mit 100 g eines Bernstein-, Glutar- und Adipinsäure im Gewichtsverhältnis 1:1:1 enthaltenden Gemisches sowie 200 g einer 50 gew.-%igen wäßrigen Lösung einer Polyacrylsäure eines gewichtsmittleren Molekulargewichts von 2500 angesäuert. Abschließend wurden 5 g des Natriumsalzes der Ethylendiamintetraessigsäure zugegeben und sprühgetrocknet.
K4 376 g auf 60°C erwärmtes Phenol wurden kontinuierlich mit 392 g 96 gew.-%iger Schwefelsäure versetzt und die erhaltene Mischung 3 h auf 165°C erhitzt. Anschließend wurden bei 75°C zunächst 238 g Harnstoff eingerührt und danach 627 g einer 30 gew.-%igen wäßrigen Formaldehydlösung zugetropft und das Gemisch bei 75°C gehalten, bis sich eine Probe im zehnfachen Volumen Wasser klar löste. Das erhaltene Gemisch wurde mit 70 g 50 gew.-%iger Natronlauge versetzt. Die Nachkondensation erfolgte wie bei K3, jedoch wurden abschließend nicht 100 g sondern 140 g 50 gew.-%ige Natronlauge zugegeben und das Ansäuern erfolge mittels 110 g eines Bernstein-, Glutar- und Adipinsäure im Gewichtsverhältnis 1:1:1 enthaltenden Gemisches und 240 g 50 gew.-%iger wäßriger Lösung einer Polyacrylsäure eines gewichtsmittleren Molekulargewichtes von 2500. Abschließend wurden 5 g des Natriumsalzes der Ethylendiamintetraessigsäure zugegeben und sprühgetrocknet.
K5 301 g auf 60°C erwärmtes Phenol wurden kontinuierlich mit 298 g Oleum (22 Gew.-% SO₃) versetzt und die erhaltene Mischung 3 h auf 160°C erhitzt. Anschließend wurden bei 75°C zunächst 135 g Wasser und 191 g Harnstoff und danach während 2 h 502 g einer 30 gew.-%igen wäßrigen Formaldehydlösung zugetropft. Das erhaltene Gemisch wurde mit 54 g 50 gew.-%iger Natronlauge versetzt. Danach wurden bei 60°C zunächst 88 g Phenol eingerührt, dann 36 g einer 30 gew.-%igen wäßrigen Formaldehydlösung zugegeben, 10 min danach 50 g 50 gew.-%ige Natronlauge zugesetzt, nochmals 36 g einer 30 gew.-%igen wäßrigen Formaldehydlösung zugegeben und 10 min danach 130 g 50 gew.-%ige Natronlauge zugesetzt. Abschließend wurden 4 g des Natriumsalzes der Ethylendiamintetraessigsäure sowie 110 g eines Bernstein-, Glutar- und Adipinsäure im Gewichtsverhältnis 1:1:1 enthaltenden Gemisches und 40 g einer 50 gew.%igen wäßrigen Lösung einer Polyacrylsäure eines gewichtsmittleren Molekulargewichts von 2500 eingerührt und sprühgetrocknet.
K6 Bis einschließlich Stufe F wie bei K5. Dann wurden 200 g des Reaktionsgemisches entnommen und mit 9,5 g einer 60 gew.-%igen wäßrigen Essigsäure und 4,5 g einer 99 gew.-%igen Ameisensäure angesäuert und abschließend durch Zugabe von 2,4 g 50 gew.-%iger Natronlauge auf pH 3,5 eingestellt und sprühgetrocknet.
K7 Wie bei K6, jedoch betrug die Entnahme des Reaktionsgemisches 300 g und der pH wurde durch Zugabe eines Gemisches aus 14,3 g 60 gew.-%iger wäßriger Essigsäure, 3 g 99 gew.-%iger Ameisensäure und 2,25 g 50 gew.-%iger Natronlauge auf 3,7 eingestellt.
K8 376 g Phenol wurden mit 392 g 96 gew.-%iger Schwefelsäure versetzt und 2 h auf 100°C erhitzt. Danach wurden 155 g eines Gemisches aus 4,4'-Dihydroxydiphenylsulfon und 2,4'-Dihydroxydiphenylsulfon (Verhältnis ca. 9:1, Fa. Yorkshire Chemicals, plc P.O. Box 6, Selby/North Yorkshire, England) zugegeben und bei 135°C so lange gerührt, bis eine homogene Reaktionsmasse erhalten wurde. Dieser wurden bei 70°C zunächst 170 g Wasser und 239 g Harnstoff und anschließend im Verlauf von 2 h 468 g einer 30 gew.-%igen wäßrigen Formaldehydlösung zugegeben. Dann wurden 100 g 50 gew.-%ige Natronlauge zugesetzt. Danach wurden bei 60°C 110 g Phenol eingerührt, dann 249 g einer 30 gew.-%igen Formaldehydlösung zugegeben und die Reaktionsmischung 10 min bei 60°C gehalten. Anschließend wurde der pH-wert durch Zugabe von 150 g 50 gew.-%iger Natronlauge zunächst erhöht und danach mittels 165 g eines Bernstein-, Glutar- und Adipinsäure im Gewichtsverhältnis 1:1:1 enthaltenden Gemisches und 46 g einer mittels Natronlauge zu 30% teilneutralisierten Polyacrylsäure eines gewichtsmittleren Molekulargewichtes von 2500 auf 3,5 reduziert, 5 g Natriumsalz der Ethylendiamintetraessigsäure zugegeben und sprühgetrocknet.
K9 376 g Phenol wurden mit 392 g 96 gew.-%iger Schwefelsäure versetzt und 3 h auf 165°C erhitzt. Danach wurden 57 g eines Gemisches aus 4,4'-Dihydroxydiphenylsulfon und 2,4'-Dihydroxydiphenylsulfon (Verhältnis ca. 7:1, Fa. Yorkshire Chemicals, plc P.O. Box 6, Selby/North Yorkshire, England) zugegeben und bei 140°C bis zur Homogenität der Reaktionsmasse gerührt. Dieser wurden bei 70°C zunächst 170 g Wasser und 239 g Harnstoff und anschließend im Verlauf von 3 h 627 g 30 gew.-%ige wäßrige Formaldehydlösung zugegeben. Dann wurden 100 g 50 gew.-%ige Natronlauge zugesetzt. Danach wurden bei 60°C zunächst 110 g Phenol eingerührt und dann nacheinander 45 g 30 gew.-%ige wäßrige Formaldehydlösung, 45 g 50 gew.-%ige Natronlauge, 45 g 30 gew.-%ige wäßrige Formaldehydlösung und 160 g 50 gew.-%ige Natronlauge eingerührt, wobei zwischen den Zugaben jeweils bis zum Erreichen einer homogenen Mischung gerührt wurde. Das Ansäuern erfolgte wie in K8. Abschließend wurden 5 g des Natriumsalzes der Ethylendiamintetraessigsäure zugegeben und sprühgetrocknet.
K10 Wie K5, jedoch wurde die Natronlauge durch eine äquivalente Menge 25 gew.-%iger wäßriger Ammoniaklösung ersetzt und das Ansäuern erfolgte mittels 135 g 60 gew.-%iger wäßriger Essigsäure und 82 g 99 gew.-%iger wäßriger Ameisensäure.
K11 376 g auf 60°C erwärmtes Phenol wurden innerhalb von 0,5 h kontinuierlich mit 372 g Oleum versetzt (24 Gew.-% SO₃) und die erhaltene Mischung 3 h auf 160°C erhitzt. Anschließend wurden bei 80°C zunächst 170 g Wasser und 238 g Harnstoff eingerührt und danach während 1 h 627 g einer 30 gew.-%igen wäßrigen Formaldehydlösung zugegeben. Anschließend wurde bis zur Homogenität der Reaktionsmischung gerührt (80°C). Das erhaltene Gemisch wurde mit 90 g 50 gew.-%iger Natronlauge versetzt. Danach wurden bei 60°C zunächst 110 g Phenol eingerührt, dann 45 g einer 30 gew.-%igen wäßrigen Formaldehydlösung zugesetzt und die Reaktionsmischung 15 min bei 60°C gehalten. Anschließend wurden 55 g 50 gew.-%ige Natronlauge hinzugefügt und nach weiteren 5 min nochmals 45 g 30 gew.-%ige wäßrige Formaldehydlösung eingerührt und die Reaktionsmischung auf 70°C erwärmt, bis die dynamische Viskosität einer entnommenen Probe 3000 mPa·s betrug (bei 50°C). Anschließend wurde der pH-Wert durch Zugabe von 173 g 50 gew.-%iger Natronlauge erhöht und danach durch Zugabe von 200 g eines Bernstein-, Glutar- und Adipinsäure im Gewichtsverhältnis 1:1:1 enthaltenden Gemisches sowie 76 g einer 33 gew.-%igen wäßrigen Lösung einer Polyacrylsäure (gewichtsmittleres Molekulargewicht 15000) angesäuert. Nach Zugabe von 5 g Natriumsalz der Ethylendiamintetraessigsäure wurde sprühgetrocknet.
K12 180 g auf 60°C erwärmtes Phenol wurden innerhalb von 0,5 h kontinuierlich mit 178 g Oleum versetzt (24 Gew.-% SO₃) und die erhaltene Mischung 3 h auf 160°C erhitzt. Anschließend wurden bei 70°C zunächst 81 g Wasser und 114 g Harnstoff und danach während 1 h 300 g 30 gew.-%ige wäßrige Formaldehydlösung zugegeben. Anschließend wurde bis zur Homogenität der Reaktionsmischung gerührt (70°C). Das erhaltene Gemisch wurde mit 257 g 50 gew.-%iger Natronlauge versetzt. Dann wurden bei 65°C 11 g einer 30 gew.-%igen wäßrigen Formaldehydlösung zugegeben und gerührt, bis die dynamisch Viskosität einer entnommenen Proben 325 mPa·s betrug (50°C).
   Anschließend wurde der pH-Wert mittels 40 g 50 gew.-%iger Natronlauge erhöht und danach mittels 23 g einer 54 gew.-%igen wäßrigen Lösung einer mittels Natriumhydroxid zu 30% teilneutralisierten Polyacrylsäure eines gewichtsmittleren Molekulargwichtes von 2500 und 110 g eines Bernstein-, Glutar- und Adipinsäure im Gewichtsverhältnis 1:1:1 enthaltenden Gemisches angesäuert. Abschließend wurden 2,5 g des Natriumsalzes der Ethylendiamintetraessigsäure zugesetzt und sprühgetrocknet.

### Beispiel 2

### Verwendung von erfindungsgemäßen Kondensationsprodukten aus Beispiel 1 zum Gerben von Tierhäuten (Prozentangaben bedeuten stets Gew.-%)

a) Fassgefärbtes Schuhoberleder
   Ein Rindwetblue der Falzstärke 1,8 mm wurde betriebsüblich gespült, gewaschen und anschließend in 200% Flotte (Wassertemperatur 40°C) mit Na-bicarbonat und Na-formiat auf einen pH-wert von 4,5 entsäuert. Dann wurde in neuer Flotte (100%, 40°C) mit 8% K1 nachgegerbt. Nach 40 min Walken wurden die Leder erneut gespült und in 100% Flotte (50°C) betriebsüblich gefärbt, gefettet und mit Ameisensäure auf einen pH-Wert von 4,0 eingestellt. Nach kurzen Spülen wurden die Leder über Nacht gelagert, dann ausgereckt, getrocknet und gestollt. Man erhielt gut gefüllte, weiche Leder mit enganliegenden, glatten Narben und wenig aufgehellter Färbung.
b) Weißes Schuhoberleder
   Ein Rindwetblue der Falzstärke 1,6 mm wurde wie in a) gewaschen und auf einen pH-Wert von 4,5 entsäuert. Dann wurde in 100% Flotte mit 3% eines handelsüblichen Polymergerbstoffs auf Acrylsäurebasis 40 min gewalkt, anschließend wurden in gleicher Flotte 6% K1 zugesetzt und weitere 40 min nachgegerbt. Nach kurzem Spülen der Leder wurde mit 6% eines handelsüblichen synthetischen (lichtechten) Fettlickers gefettet und mit Ameisensäure fixiert.
   Die nach Trocknung und Stollen erhaltenen Leder wiesen neben guter Fülle einen hohen Weißgrad auf. Sie zeigten zudem hohe Lichtechtheit und gute wärmeresistenz. Die so erhaltenen Leder konnten betriebsüblich gefärbt und fertiggestellt werden.
c) Wie b), jedoch wurde K1 durch K2 ersetzt. Man erhielt gleichfalls ein gut gefülltes, weiches Leder mit hohem Weißgrad, guter Lichtechtheit und wärmeresistenz. Das so erhaltene Leder konnte betriebsüblich gefärbt und fertiggestellt werden.
d) Wie b), jedoch wurde K1 durch K4 ersetzt. Man erhielt ein gut gefülltes, weiches Leder mit hohem weißgrad, guter Lichtechtheit und Wärmeresistenz. Das so erhaltene Leder konnte betriebsüblich gefärbt und fertiggestellt werden.
e) Wie b), jedoch wurde K1 durch K8 ersetzt. Man erhielt ein gut gefülltes Leder mit hohem Weißgrad und guten Licht- und Wärmeechtheiten. Das so erhaltene Leder konnte betriebsüblich gefärbt und fertiggestellt werden.
f) Wie b), jedoch wurde K1 durch K9 ersetzt. Man erhielt ein gut gefülltes Leder mit hohem Weißgrad und guten Licht- und Wärmeechtheiten. Das so erhaltene Leder konnte betriebsüblich gefärbt und fertiggestellt werden.

## Patentansprüche (Patentansprüche für folgende(n) Vertragsstaat(en): DE, FR, GB, IT)

1. Kondensationsprodukte aus Phenolmonosulfonsäuren, Dihydroxydiphenylsulfonen, Harnstoff und Formaldehyd, dadurch erhältlich, daß man
A) in Schwefelsäure aus Phenolmonosulfonsäuren und Dihydroxydiphenylsulfonen im molaren Verhältnis von 3:1 bis 10:1, mit der Maßgabe, daß das Gemisch, bezogen auf das Gesamtgewicht der Komponenten, höchstens 10 Gew.-% Wasser und pro Mol Dihydroxydiphenylsulfon 0,3 bis 1,5 Mol Schwefelsäure enthält, bei 100 bis 180°C eine homogene Reaktionsmasse zubereitet,
B) anschließend bei 40 bis 90°C pro Mol vorhandener Phenoleinheiten mit 1 bis 2 Mol Formaldehyd und 0,5 bis 1,5 Mol Harnstoff in wäßrigem Medium vorkondensiert,
C) das Reaktionsgemisch teilneutralisiert,
D) das teilneutralisierte Reaktionsgemisch pro Mol vorhandener Phenoleinheiten mit 0 bis 0,5 Mol Phenol und pro Mol der danach vorhandenen Phenoleinheiten mit 0,1 bis 0,8 Mol Formaldehyd versetzt,
E) bei 40 bis 90°C nachkondensiert,
F) den pH-Wert des Reaktionsgemisches in den neutralen Bereich verschiebt und
G) anschließend mit einer schwachen Säure ansäuert.

2. Kondensationsprodukte nach Anspruch 1, dadurch erhältlich, daß man die Stufe A so realisiert, daß man Phenol mit konzentrierter Schwefelsäure, mit Oleum eines SO₃-Gehaltes von 20 bis 65 Gew.-% oder mit einem Gemisch aus Schwefelsäure und Oleum eines SO₃-Gehaltes von 20 bis 65 Gew.-% 1 bis 10 h auf 100 bis 180°C erhitzt, wobei das Molverhältnis von Phenol zu Schwefelgesamtsäure, gerechnet als Schwefeltrioxid, 1 bis 1,2:1 beträgt.

3. Kondensationsprodukte nach Anspruch 2, dadurch erhältlich, daß man die Umsetzung in der Stufe A mit Oleum eines SO₃-Gehaltes von 20 bis 32 Gew.-% bei Temperaturen von 150 bis 180°C durchführt.

4. Kondensationsprodukte nach den Ansprüchen 1 bis 3, dadurch erhältlich, daß das molare Verhältnis von Phenolmonosulfonsäuren zu Dihydroxydiphenylsulfonen im Bereich von 3,5:1 bis 5:1 liegt.

5. Kondensationsprodukte nach den Ansprüchen 1 bis 4, dadurch erhältlich, daß die in der Stufe B pro Mol vorhandener Phenoleinheiten zugegebene Menge Harnstoff 0,6 bis 1 Mol beträgt.

6. Kondensationsprodukte nach den Ansprüchen 1 bis 5, dadurch erhältlich, daß die in der Stufe B pro Mol vorhandener Phenoleinheiten zugegebene Menge Formaldehyd 1,4 bis 1,8 Mol beträgt.

7. Kondensationsprodukte nach den Ansprüchen 1 bis 6, dadurch erhältlich, daß man in der Stufe B bei 50 bis 60°C 0,5 bis 3 h kondensiert.

8. Kondensationsprodukte nach den Ansprüchen 1 bis 7, dadurch erhältlich, daß man in der Stufe C den pH-Wert bei der Teilneutralisation soweit erhöht, daß pro Gramm Reaktionsgemisch die Zugabe von 0,05 bis 0,08 g Natriumhydroxid eine weitere Erhöhung des pH auf einen Wert von 7 bewirken würde.

9. Kondensationsprodukte nach den Ansprüchen 1 bis 8, dadurch erhältlich, daß man in der Stufe D kein Phenol zusetzt.

10. Kondensationsprodukte nach den Ansprüchen 1 bis 8, dadurch erhältlich, daß man in der Stufe D pro Mol vorhandener Phenoleinheiten 0,2 bis 0,4 Mol Phenol zusetzt.

11. Kondensationsprodukte nach den Ansprüchen 1 bis 10, dadurch erhältlich, daß man in der Stufe D pro Mol vorhandener Phenoleinheiten 0,1 bis 0,4 Mol Formaldehyd zusetzt.

12. Kondensationsprodukte nach den Ansprüchen 1 bis 11, dadurch erhältlich, daß man für den Fall, daß in der Stufe D kein Phenol zugesetzt worden ist, so lange nachkondensiert, bis die dynamische Viskosität der Reaktionsmischung, gemessen bei 50°C mit einem Rotationsviskosimeter der Fa. Brookfield, Typ LVT, Spindelnummer LV2, bei einer Geschwindigkeit von 12 Umdrehungen/min, gegen ein 400 ml Becherglas mit 80mm Durchmesser, einen Wert von 300 bis 350 mPa·s erreicht hat.

13. Kondensationsprodukte nach den Ansprüchen 1 bis 12, dadurch erhältlich, daß man für den Fall, daß in der Stufe D Phenol zugesetzt worden worden ist, so lange nachkondensiert, bis die dynamische Viskosität der Reaktionsmischung, gemessen bei 50°C mit einem Rotationsviskosimeter der Fa. Brookfield, Typ LVT, Spindelnummer LV2, bei einer Geschwindigkeit von 12 Umdrehungen/min, gegen ein 400 ml Becherglas mit 80mm Durchmesser, einen Wert von 1000 bis 4000 mPa·s erreicht hat.

14. Kondensationsprodukte nach den Ansprüchen 1 bis 13, dadurch erhältlich, daß man in der Stufe F den pH Wert in den Bereich 6 bis 8 verschiebt.

15. Kondensationsprodukte nach den Ansprüchen 1 bis 14, dadurch erhältlich, daß man in der Stufe G den pH-Wert auf 3 bis 4 reduziert.

16. Kondensationsprodukte nach den Ansprüchen 1 bis 15, dadurch erhältlich, daß man in der Stufe G zum Ansäuern eine in Wasser lösliche hochmolekulare vollsaure oder teilneutralisierte Polycarbonsäure verwendet.

17. Kondensationsprodukte nach den Ansprüchen 1 bis 16, dadurch erhältlich, daß man im Anschluß an die Stufe G die wäßrige Mischung durch Trocknungsverfahren in die feste Form überführt.

18. Kondensationsprodukte nach den Ansprüchen 1 bis 17, dadurch erhältlich, daß man im Falle einer Phenolzugabe in der Stufe D, die Stufen D bis F miteinander verschmilzt und kaskadenförmig arbeitet.

19. Verfahren zur Herstellung von Kondensationsprodukten gemäß Anspruch 1, dadurch gekennzeichnet, daß man
A) in Schwefelsäure aus Phenolmonosulfonsäuren und Dihydroxydiphenylsulfonen im molaren Verhältnis von 3:1 bis 10:1, mit der Maßgabe, daß das Gemisch, bezogen auf das Gesamtgewicht der Komponenten, höchstens 10 Gew.-% Wasser und pro Mol Dihydroxydiphenylsulfon 0,3 bis 1,5 Mol Schwefelsäure enthält, bei 100 bis 180°C eine homogene Reaktionsmasse zubereitet,
B) anschließend bei 40 bis 90°C pro Mol vorhandener Phenoleinheiten mit 1 bis 2 Mol Formaldehyd und 0,5 bis 1,5 Mol Harnstoff in wäßrigem Medium vorkondensiert,
C) das Reaktionsgemisch teilneutralisiert,
D) das teilneutralisierte Reaktionsgemisch pro Mol vorhandener Phenoleinheiten mit 0 bis 0,5 Mol Phenol und pro Mol der danach vorhandenen Phenoleinheiten mit 0,1 bis 0,8 Mol Formaldehyd versetzt,
E) bei 40 bis 90°C nachkondensiert,
F) den pH-Wert des Reaktionsgemisches in den neutralen Bereich verschiebt und
G) anschließend mit einer schwachen Säure ansäuert.

20. Verfahren nach Anspruch 19, dadurch gekennzeichnet, daß man die Stufe A so realisiert, daß man Phenol mit konzentrierter Schwefelsäure, mit Oleum eines SO₃-Gehaltes von 20 bis 65 Gew.-% oder mit einem Gemisch aus Schwefelsäure und Oleum eines SO₃-Gehaltes von 20 bis 65 Gew.-% 1 bis 10 h auf 100 bis 180°C erhitzt, wobei das Molverhältnis von Phenol zu Schwefelgesamtsäure, gerechnet als Schwefeltrioxid, 1 bis 1,2:1 beträgt.

21. Verwendung von Kondensationsprodukten gemäß den Ansprüchen 1 bis 18 zum Gerben von Tierhäuten.

22. Verwendung von Kondensationsprodukten gemäß den Ansprüchen 1 bis 19 zum Weißnachgerben von Ledern.

## Patentansprüche (Patentansprüche für folgende(n) Vertragsstaat(en): ES)

1. Verfahren zur Herstellung von Kondensationsprodukten aus Phenolmonosulfonsäuren, Dihydroxydiphenylsulfonen, Harnstoff und Formaldehyd, dadurch gekennzeichnet, daß man
A) in Schwefelsäure aus Phenolmonosulfonsäuren und Dihydroxydiphenylsulfonen im molaren Verhältnis von 3:1 bis 10:1, mit der Maßgabe, daß das Gemisch, bezogen auf das Gesamtgewicht der Komponenten, höchstens 10 Gew.-% Wasser und pro Mol Dihydroxydiphenylsulfon 0,3 bis 1,5 Mol Schwefelsäure enthält, bei 100 bis 180°C eine homogene Reaktionsmasse zubereitet,
B) anschließend bei 40 bis 90°C pro Mol vorhandener Phenoleinheiten mit 1 bis 2 Mol Formaldehyd und 0,5 bis 1,5 Mol Harnstoff in wäßrigem Medium vorkondensiert,
C) das Reaktionsgemisch teilneutralisiert,
D) das teilneutralisierte Reaktionsgemisch pro Mol vorhandener Phenoleinheiten mit 0 bis 0,5 Mol Phenol und pro Mol der danach vorhandenen Phenoleinheiten mit 0,1 bis 0,8 Mol Formaldehyd versetzt,
E) bei 40 bis 90°C nachkondensiert,
F) den pH-Wert des Reaktionsgemisches in den neutralen Bereich verschiebt und
G) anschließend mit einer schwachen Säure ansäuert.

2. Verfahren zur Herstellung von Kondensationsprodukten nach Anspruch 1, dadurch gekennzeichnet, daß man die Stufe A so realisiert, daß man Phenol mit konzentrierter Schwefelsäure, mit Oleum eines SO₃-Gehaltes von 20 bis 65 Gew.-% oder mit einem Gemisch aus Schwefelsäure und Oleum eines SO₃-Gehaltes von 20 bis 65 Gew.-% 1 bis 10 h auf 100 bis 180°C erhitzt, wobei das Molverhältnis von Phenol zu Schwefelgesamtsäure, gerechnet als Schwefeltrioxid, 1 bis 1,2:1 beträgt.

3. Verfahren zur Herstellung von Kondensationsprodukten nach Anspruch 2, dadurch gekennzeichnet, daß man die Umsetzung in der Stufe A mit Oleum eines SO₃-Gehaltes von 20 bis 32 Gew.-% bei Temperaturen von 150 bis 180°C durchführt.

4. Verfahren zur Herstellung von Kondensationsprodukten nach den Ansprüchen 1 bis 3, dadurch gekennzeichnet, daß das molare Verhältnis von Phenolmonosulfonsäuren zu Dihydroxydiphenylsulfonen im Bereich von 3,5:1 bis 5:1 liegt.

5. Verfahren zur Herstellung von Kondensationsprodukten nach den Ansprüchen 1 bis 4, dadurch gekennzeichnet, daß die in der Stufe B pro Mol vorhandener Phenoleinheiten zugegebene Menge Harnstoff 0,6 bis 1 Mol beträgt.

6. Verfahren zur Herstellung von Kondensationsprodukten nach den Ansprüchen 1 bis 5, dadurch gekennzeichnet, daß die in der Stufe B pro Mol vorhandener Phenoleinheiten zugegebene Menge Formaldehyd 1,4 bis 1,8 Mol beträgt.

7. Verfahren zur Herstellung von Kondensationsprodukten nach den Ansprüchen 1 bis 6, dadurch gekennzeichnet, daß man in der Stufe B bei 50 bis 60°C 0,5 bis 3 h kondensiert.

8. Verfahren zur Herstellung von Kondensationsprodukten nach den Ansprüchen 1 bis 7, dadurch gekennzeichnet, daß man in der Stufe C den pH-Wert bei der Teilneutralisation soweit erhöht, daß pro Gramm Reaktionsgemisch die Zugabe von 0,05 bis 0,08 g Natriumhydroxid eine weitere Erhöhung des pH auf einen Wert von 7 bewirken würde.

9. Verfahren zur Herstellung von Kondensationsprodukten nach den Ansprüchen 1 bis 8, dadurch gekennzeichnet, daß man in der Stufe D kein Phenol zusetzt.

10. Verfahren zur Herstellung von Kondensationsprodukten nach den Ansprüchen 1 bis 8, dadurch gekennzeichnet, daß man in der Stufe D pro Mol vorhandener Phenoleinheiten 0,2 bis 0,4 Mol Phenol zusetzt.

11. Verfahren zur Herstellung von Kondensationsprodukten nach den Ansprüchen 1 bis 10, dadurch gekennzeichnet, daß man in der Stufe D pro Mol vorhandener Phenoleinheiten 0,1 bis 0,4 Mol Formaldehyd zusetzt.

12. Verfahren zur Herstellung von Kondensationsprodukten nach den Ansprüchen 1 bis 11, dadurch gekennzeichnet, daß man für den Fall, daß in der Stufe D kein Phenol zugesetzt worden ist, so lange nachkondensiert, bis die dynamische Viskosität der Reaktionsmischung, gemessen bei 50°C mit einem Rotationsviskosimeter der Fa. Brookfield, Typ LVT, Spindelnummer LV2, bei einer Geschwindigkeit von 12 Umdrehungen/min, gegen ein 400 ml Becherglas mit 80mm Durchmesser einen Wert von 300 bis 350 mPa·s erreicht hat.

13. Verfahren zur Herstellung von Kondensationsprodukten nach den Ansprüchen 1 bis 12, dadurch gekennzeichnet, daß man für den Fall, daß in der Stufe D Phenol zugesetzt worden worden ist, so lange nachkondensiert, bis die dynamische Viskosität der Reaktionsmischung, gemessen bei 50°C mit einem Rotationsviskosimeter der Fa. Brookfield, Typ LVT, Spindelnummer LV2, bei einer Geschwindigkeit von 12 Umdrehungen/min, gegen ein 400 ml Becherglas mit 80mm Durchmesser einen Wert von 1000 bis 4000 mPa·s erreicht hat.

14. Verfahren zur Herstellung von Kondensationsprodukten nach den Ansprüchen 1 bis 13, dadurch gekennzeichnet, daß man in der Stufe F den pH Wert in den Bereich 6 bis 8 verschiebt.

15. Verfahren zur Herstellung von Kondensationsprodukten nach den Ansprüchen 1 bis 14, dadurch gekennzeichnet, daß man in der Stufe G den pH-Wert auf 3 bis 4 reduziert.

16. Verfahren zur Herstellung von Kondensationsprodukten nach den Ansprüchen 1 bis 15, dadurch gekennzeichnet, daß man in der Stufe G zum Ansäuern eine in Wasser lösliche hochmolekulare vollsaure oder teilneutralisierte Polycarbonsäure verwendet.

17. Verfahren zur Herstellung von Kondensationsprodukten nach den Ansprüchen 1 bis 16, dadurch gekennzeichnet, daß man im Anschluß an die Stufe G die wäßrige Mischung durch Trocknungsverfahren in die feste Form überführt.

18. Verfahren zur Herstellung von Kondensationsprodukten nach den Ansprüchen 1 bis 17, dadurch gekennzeichnet, daß man im Falle einer Phenolzugabe in der Stufe D, die Stufen D bis F miteinander verschmilzt und kaskadenförmig arbeitet.

19. Verfahren zum Gerben von Tierhäuten, dadurch gekennzeichnet, daß man hierzu Kondensationsprodukte gemäß den Ansprüchen 1 bis 18 verwendet.

20. Verfahren zum weißnachgerben von Ledern, dadurch gekennzeichnet, daß man hierzu Kondensationsprodukte gemäß den Ansprüchen 1 bis 18 verwendet.

## Claims (Claims for the following Contracting State(s): DE, FR, GB, IT)

1. A product of the condensation of a phenolmonosulfonic acid, a dihydroxydiphenyl sulfone, urea and formaldehyde, obtainable by
A) preparing a homogeneous reaction mixture in sulfuric acid from the phenolmonosulfonic acid and dihydroxydiphenyl sulfone in the molar ratio of from 3:1 to 10:1, with the proviso that the water content of the mixture is not more than 10% of the total weight of the components, and the mixture contains from 0.3 to 1.5 moles of sulfuric acid per mole of dihydroxydiphenyl sulfone, at from 100 to 180°C,
B) subsequently, at from 40 to 90°C, carrying out a precondensation with 1 to 2 moles of formaldehyde and 0.5 to 1.5 moles of urea per mole of phenol units present in aqueous medium,
C) partially neutralizing the reaction mixture,
D) adding to the partially neutralized reaction mixture 0 to 0.5 mole of phenol per mole of phenol units present and then 0.1 to 0.8 mole of formaldehyde per mole of phenol units then present,
E) further condensing at from 40 to 90°C,
F) shifting the pH of the reaction mixture into the neutral range and
G) subsequently acidifying with a weak acid.

2. A condensation product as claimed in claim 1, obtainable by carrying out stage A in such a way that phenol is heated with concentrated sulfuric acid, with oleum with an SO₃ content of from 20 to 65% by weight, or with a mixture of sulfuric acid and oleum with an SO₃ content of from 20 to 65% by weight, at from 100 to 180°C for from 1 to 10 h, the molar ratio of phenol to total sulfuric acid, calculated as sulfur trioxide, being from 1 to 1.2:1.

3. A condensation product as claimed in claim 2, obtainable by carrying out the reaction in stage A with oleum with an SO₃ content of from 20 to 32% by weight at from 150 to 180°C.

4. A condensation product as claimed in claims 1 to 3, obtainable by the molar ratio of phenolmonosulfonic acid to dihydroxydiphenyl sulfone being in the range from 3.5:1 to 5:1.

5. A condensation product as claimed in claims 1 to 4, obtainable by the amount of urea added in stage B per mole of phenol units present being from 0.6 to 1 mole.

6. A condensation product as claimed in claims 1 to 5, obtainable by the amount of formaldehyde added in stage B per mole of phenol units present being from 1.4 to 1.8 moles.

7. A condensation product as claimed in claims 1 to 6, obtainable by condensation in stage B at from 50 to 60°C for from 0.5 to 3 h.

8. A condensation product as claimed in claims 1 to 7, obtainable by raising the pH in the partial neutralization in stage C until the addition of 0.05 to 0.08 g of sodium hydroxide per gram of reaction mixture would increase the pH further to 7.

9. A condensation product as claimed in claims 1 to 8, obtainable by not adding phenol in stage D.

10. A condensation product as claimed in claims 1 to 8, obtainable by adding from 0.2 to 0.4 mole of phenol per mole of phenol units present in stage D.

11. A condensation product as claimed in claims 1 to 10, obtainable by adding from 0.1 to 0.4 mole of formaldehyde per mole of phenol units present in stage D.

12. A condensation product as claimed in claims 1 to 11, obtainable in the case where no phenol has been added in stage D by carrying out further condensation until the dynamic viscosity of the reaction mixture, measured at 50°C with a rotation viscometer from Brookfield, Type LVT, spindle number LV2, at a rate of 12 revolutions per min using a 400 ml beaker with a diameter of 80 mm, has reached from 300 to 350 mPa.s.

13. A condensation product as claimed in claims 1 to 12, obtainable in the case where phenol has been added in stage D by carrying out further condensation until the dynamic viscosity of the reaction mixture, measured at 50°C, with a rotation viscometer from Brookfield, Type LVT, spindle number LV2, at a rate of 12 revolutions per min using a 400 ml beaker with a diameter of 80 mm, has reached from 1000 to 4000 mPa.s.

14. A condensation product as claimed in claims 1 to 13, obtainable by shifting the pH into the range from 6 to 8 in stage F.

15. A condensation product as claimed in claims 1 to 14, obtainable by reducing the pH to from 3 to 4 in stage G.

16. A condensation product as claimed in claims 1 to 15, obtainable by using for the acidification in stage G a water-soluble high molecular weight unneutralized or partially neutralized polycarboxylic acid.

17. A condensation product as claimed in claims 1 to 16, obtainable by following stage G by converting the aqueous mixture by drying processes into the solid form.

18. A condensation product as claimed in claims 1 to 17, obtainable in the case where phenol is added in stage D by melting together stages D to F and carrying out a cascade operation.

19. A process for preparing a condensation product as claimed in claim 1, which comprises
A) preparing a homogeneous reaction mixture in sulfuric acid from the phenolmonosulfonic acid and dihydroxydiphenyl sulfone in the molar ratio of from 3:1 to 10:1, with the proviso that the water content of the mixture is not more than 10% of the total weight of the components, and the mixture contains from 0.3 to 1.5 moles of sulfuric acid per mole of dihydroxydiphenyl sulfone, at from 100 to 180°C,
B) subsequently, at from 40 to 90°C, carrying out a precondensation with 1 to 2 moles of formaldehyde and 0.5 to 1.5 moles of urea per mole of phenol units present in aqueous medium,
C) partially neutralizing the reaction mixture,
D) adding to the partially neutralized reaction mixture 0 to 0.5 mole of phenol per mole of phenol units present and then 0.1 to 0.8 mole of formaldehyde per mole of phenol units then present,
E) further condensing at from 40 to 90°C,
F) shifting the pH of the reaction mixture into the neutral range and
G) subsequently acidifying with a weak acid.

20. A process as claimed in claim 19, wherein stage A is carried out in such a way that phenol is heated with concentrated sulfuric acid, with oleum with an SO₃ content of from 20 to 65% by weight, or with a mixture of sulfuric acid and oleum with an SO₃ content of from 20 to 65 % by weight, at from 100 to 180°C for from 1 to 10 h, the molar ratio of phenol to total sulfuric acid, calculated as sulfur trioxide, being from 1 to 1.2:1.

21. The use of condensation products as claimed in claims 1 to 18 for tanning animal hides.

22. The use of condensation products as claimed in claims 1 to 18 for the alum retanning of leather.

## Claims (Claims for the following Contracting State(s): ES)

1. A process for preparing a product of the condensation of a phenolmonosulfonic acid, a dihydroxydiphenyl sulfone, urea and formaldehyde, which comprises
A) preparing a homogeneous reaction mixture in sulfuric acid from the phenolmonosulfonic acid and dihydroxydiphenyl sulfone in the molar ratio of from 3:1 to 10:1, with the proviso that the water content of the mixture is not more than 10% of the total weight of the components, and the mixture contains from 0.3 to 1.5 moles of sulfuric acid per mole of dihydroxydiphenyl sulfone, at from 100 to 180°C,
B) subsequently, at from 40 to 90°C, carrying out a precondensation with 1 to 2 moles of formaldehyde and 0.5 to 1.5 moles of urea per mole of phenol units present in aqueous medium,
C) partially neutralizing the reaction mixture,
D) adding to the partially neutralized reaction mixture 0 to 0.5 mole of phenol per mole of phenol units present and then 0.1 to 0.8 mole of formaldehyde per mole of phenol units then present,
E) further condensing at from 40 to 90°C,
F) shifting the pH of the reaction mixture into the neutral range and
G) subsequently acidifying with a weak acid.

2. A process for preparing a condensation product as claimed in claim 1, wherein stage A is carried out in such a way that phenol is heated with concentrated sulfuric acid, with oleum with an SO₃ content of from 20 to 65% by weight, or with a mixture of sulfuric acid and oleum with an SO₃ content of from 20 to 65% by weight, at from 100 to 180°C for from 1 to 10 h, the molar ratio of phenol to total sulfuric acid, calculated as sulfur trioxide, being from 1 to 1.2:1.

3. A process for preparing a condensation product as claimed in claim 2, wherein the reaction in stage A is carried out with oleum with an SO₃ content of from 20 to 32% by weight at from 150 to 180°C.

4. A process for preparing a condensation product as claimed in claims 1 to 3, wherein the molar ratio of phenolmonosulfonic acid to dihydroxydiphenyl sulfone is in the range from 3.5:1 to 5:1.

5. A process for preparing a condensation product as claimed in claims 1 to 4, wherein the amount of urea added in stage B per mole of phenol units present is from 0.6 to 1 mole.

6. A process for preparing a condensation product as claimed in claims 1 to 5, wherein the amount of formaldehyde added in stage B per mole of phenol units present is from 1.4 to 1.8 moles.

7. A process for preparing a condensation product as claimed in claims 1 to 6, wherein the condensation in stage B is carried out at from 50 to 60°C for from 0.5 to 3 h.

8. A process for preparing a condensation product as claimed in claims 1 to 7, wherein the pH is raised in the partial neutralization in stage C until the addition of 0.05 to 0.08 g of sodium hydroxide per gram of reaction mixture would increase the pH further to 7.

9. A process for preparing a condensation product as claimed in claims 1 to 8, wherein phenol is not added in stage D.

10. A process for preparing a condensation product as claimed in claims 1 to 8, wherein from 0.2 to 0.4 mole of phenol is added per mole of phenol units present in stage D.

11. A process for preparing a condensation product as claimed in claims 1 to 10, wherein from 0.1 to 0.4 mole of formaldehyde is added per mole of phenol units present in stage D.

12. A process for preparing a condensation product as claimed in claims 1 to 11, wherein in the case where no phenol has been added in stage D further condensation is carried out until the dynamic viscosity of the reaction mixture, measured at 50°C, with a rotation viscometer from Brookfield, Type LVT, spindle number LV2, at a rate of 12 revolutions per min using a 400 ml beaker with a diameter of 80 mm, has reached from 300 to 350 mPa.s.

13. A process for preparing a condensation product as claimed in claims 1 to 12, wherein, in the case where phenol has been added in stage D, further condensation is carried out until the dynamic viscosity of the reaction mixture, measured at 50°C, with a rotation viscometer from Brookfield, Type LVT, spindle number LV2, at a rate of 12 revolutions per min using a 400 ml beaker with a diameter of 80 mm, has reached from 1000 to 4000 mPa.s.

14. A process for preparing a condensation product as claimed in claims 1 to 13, wherein the pH is shifted into the range from 6 to 8 in stage F.

15. A process for preparing a condensation product as claimed in claims 1 to 14, wherein the pH is reduced to from 3 to 4 in stage G.

16. A process for preparing a condensation product as claimed in claims 1 to 15, wherein a water-soluble high molecular weight unneutralized or partially neutralized polycarboxylic acid is used for the acidification in stage G.

17. A process for preparing a condensation product as claimed in claims 1 to 16, wherein following stage G the aqueous mixture is converted into the solid form by drying processes.

18. A process for preparing a condensation product as claimed in claims 1 to 17, wherein, in the case where phenol is added in stage D, stages D to F are melted together and a cascade operation is carried out.

19. A method for tanning animal hides, which comprises using condensation products according to claims 1 to 18.

20. A method for the alum retanning of leather, which comprises using condensation products according to claims 1 to 18.

## Revendications (Revendications pour l'(les) Etat(s) contractant(s) suivant(s): DE, FR, GB, IT)

1. Produits de condensation d'acides phénolmonosulfoniques, de dihydroxydiphénylsulfones, d'urée et de formaldéhyde, pouvant être obtenus
A) en préparant une masse réactionnelle homogène dans de l'acide sulfurique, à une température de 100 à 180°C, à partir d'acides phénolmonosulfoniques et de dihydroxydiphénylsulfones dans un rapport molaire de 3:1 à 10:1, étant specifié que le mélange contient au maximum, par rapport au poids total des composants, 10% en poids d'eau et, par mole de dihydroxydiphénylsulfone, 0,3 à 1,5 mole d'acide sulfurique,
B) en précondensant ensuite, en milieu aqueux et à une temperature de 40 a 90°C, avec 1 à 2 moles de formaldéhyde et 0,5 à 1,5 mole d'urée par mole de motifs phénol présents,
C) en neutralisant partiellement le mélange réactionnel,
D) en additionnant le mélange réactionnel partiellement neutralise de 0 à 0,5 mole de phénol par mole de motifs phénol présents et de 0,1 à 0,8 mole de formaldéhyde par mole des motifs phénol présents après cela,
E) en post-condensant a une temperature de 40 à 90°C,
F) en déplacant dans la gamme neutre de pH du mélange réactionnel et
G) en acidifiant ensuite avec un acide faible.

2. Produits de condensation selon la revendication 1, pouvant être obtenus par le fait qu'on exécute l'étape A en chauffant de phénol avec de l'acide sulfurique concentré, avec un oléum ayant une teneur en SO₃ de 20 à 65% en poids ou avec un mélange d'acide sulfurique et d'oléum ayant une teneur en SO₃ de 20 à 65% en poids, pendant 1 à 10 h à une température de 100 à 180°C, de rapport molaire du phénol à l'acide sulfurique total, calculé en tant qu'anhydride sulfurique, s'élevant à 1-1,2:1.

3. Produits de condensation selon la revendication 2, pouvant être obtenus par le fait que, dans l'étape A, on conduit la réaction avec un oléum ayant une teneur en SO₃ de 20 à 32% en poids, à une température de 150 à 180°C.

4. Produits de condensation selon d'une quelconque des revendications 1 à 3, pouvant être obtenus par le fait que le rapport molaire des acides phénolmonosulfoniques aux dihydroxydiphénylsulfones se situe dans la gamme de 3,5:1 à 5:1.

5. Produits de condensation selon l'une quelconque des revendications 1 à 4, pouvant être obtenus par le fait que la quantité d'urée ajoutée dans l'étape B, par mole de motifs phénol présents, est comprise entre 0,6 et 1 mole.

6. Produits de condensation selon d'une quelconque des revendications 1 a 5, pouvant être obtenus par de fait que la quantité de formaldéhyde ajoutée dans l'étape B, par mole de motifs phénol présents, est comprise entre 1,4 et 1,8 mole.

7. Produits de condensation selon l'une quelconque des revendications 1 a 6, pouvant être obtenus par le fait que, dans l'étape B, on condense à une température de 50 à 60°C pendant 0,5 à 3 h.

8. Produits de condensation selon l'une quelconque des revendications 1 à 7, pouvant être obtenus par le fait que, dans l'étape C, on effectue la neutralisation partielle en élevant le pH jusqu'à une valeur à laquelle l'addition de 0,05 à 0,08 g d'hydroxyde de sodium, par gramme de mélange réactionnel, produirait une nouvelle élévation du pH à une valeur de 7.

9. Produits de condensation selon l'une quelconque des revendications 1 à 8, pouvant être obtenus par le fait qu'on n'ajoute pas de phénol dans l'étape D.

10. Produits de condensation selon d'une quelconque des revendications 1 à 8, pouvant être obtenus par le fait que, dans d'étape D, on ajoute 0,2 à 0,4 mole de phénol par mole de motifs phénol présents.

11. Produits de condensation selon l'une quelconque des revendications 1 à 10, pouvant être obtenus par le fait que, dans l'étape D, on ajoute 0,1 à 0,4 mole de formaldéhyde par mole de motifs phénol présents.

12. Produits de condensation selon d'une quelconque des revendications 1 à 11, pouvant être obtenus par le fait que, dans le cas où il n'a pas été ajouté de phénol dans l'étape D, on poursuit la post-condensation jusqu'à ce que la viscosité dynamique du mélange réactionnel, mesurée à 50°C avec un viscosimètre rotatif de la firme Brookfield, Type LVT, numéro de broche LV2, à une vitesse de 12 tr/mn, dans un becher de 400 ml ayant un diamètre de 80 mm, ait atteint une valeur de 300 à 350 mPa.s.

13. Produits de condensation selon d'une quelconque des revendications 1 à 12, pouvant être obtenus par le fait que, dans le cas où du phénol a été ajouté dans l'étape D, on poursuit la post-condensation jusqu'à ce que la viscosité dynamique du mélange réactionnel, mesurée à 50°C avec un viscosimètre rotatif de la firme Brookfield, Type LVT, numéro de broche LV2, à une vitesse de 12 tr/mn, dans un becher de 400 ml ayant un diamètre de 80 mm, ait atteint une valeur de 1000 à 4000 mPa.s.

14. Produits de condensation selon l'une quelconque des revendications 1 à 13, pouvant être obtenus par le fait que, dans l'étape F, on déplace le pH dans la gamme de 6 à 8.

15. Produits de condensation selon d'une quelconque des revendications 1 à 14, pouvant être obtenus par le fait que, dans l'étape G, on abaisse le pH à une valeur de 3 à 4.

16. Produits de condensation selon d'une quelconque des revendications 1 à 15, pouvant être obtenus par le fait que, dans l'étape G, on utilise pour l'acidification un acide polycarboxylique de poids moléculaire élevé, soluble dans l'eau, ayant sa pleine acidité ou partiellement neutralisé.

17. Produits de condensation selon d'une quelconque des revendications 1 à 16, pouvant être obtenus par le fait qu'à la suite de l'étape G, on met de mélange aqueux sous la forme solide par un procédé de séchage.

18. Produits de condensation selon d'une quelconque des revendications 1 à 17, pouvant être obtenus par le fait que, dans le cas d'une addition de phénol dans l'étape D, les étapes D à F sont réunies et exécutées en cascade.

19. Procedé de préparation de produits de condensation selon la revendication 1, caractérise en ce que
A) l'on prépare une masse réactionnelle homogène dans de l'acide sulfurique, à une température de 100 à 180°C, à partir d'acides phenolmonosulfoniques et de dihydroxydiphénylsulfones dans un rapport molaire de 3:1 à 10:1, étant spécifié que le mélange contient au maximum, par rapport au poids total des composants, 10% en poids d'eau et, par mole de dihydroxydiphénylsulfone, 0,3 à 1,5 mole d'acide sulfurique,
B) on précondense ensuite, en milieu aqueux et à une température de 40 à 90°C, avec 1 à 2 moles de formaldéhyde et 0,5 a 1,5 mole d'urée par mole de motifs phénol présents,
C) on neutralise partiellement le mélange réactionnel,
D) on additionne de mélange réactionnel partiellement neutralisé de 0 à 0,5 mole de phénol par mole de motifs phénol présents et de 0,1 à 0,8 mole de formaldéhyde par mole des motifs phénol présents après cela,
E) on post-condense à une température de 40 à 90°C,
F) on déplace dans la gamme neutre le pH du mélange réactionnel et
G) on acidifie ensuite avec un acide faible.

20. Procédé selon la revendication 19, caractérisé en ce qu'on exécute l'étape A en chauffant le phénol avec de l'acide sulfurique concentré, avec un oléum ayant une teneur en SO₃ de 20 a 65% en poids ou avec un mélange d'acide sulfurique et d'oléum ayant une teneur en SO₃ de 20 à 65% en poids, pendant 1 à 10 h à une temperature de 100 à 180°C, le rapport molaire du phénol à l'acide sulfurique total, calcule en tant qu'anhydride sulfurique, s'élevant à 1-1,2:1.

21. Utilisation de produits de condensation selon l'une quelconque des revendications 1 à 18 pour le tannage de peaux d'animaux.

22. Utilisation de produits de condensation selon l'une quelconque des revendications 1 à 19 pour le retannage en blanc de cuirs.

## Revendications (Revendications pour l'(les) Etat(s) contractant(s) suivant(s): ES)

1. Prcédé de préparation de produits de condensation d'acides phénolmonosulfoniques, de dihydroxydiphénylsulfones, d'urée et de formaldéhyde, caractérisé en ce que
A) l'on prépare une masse réactionnelle homogène dans de l'acide sulfurique, à une température de 100 à 180°C, à partir d'acides phénolmonosulfoniques et de dihydroxydiphénylsulfones dans un rapport molaire de 3:1 à 10:1, étant spécifie que le mélange contient au maximum, par rapport au poids total des composants, 10% en poids d'eau et, par mole de dihydroxydiphénylsulfone, 0,3 a 1,5 mole d'acide sulfurique,
B) on précondense ensuite, en milieu aqueux et à une temperature de 40 a 90°C, avec 1 à 2 moles de formaldéhyde et 0,5 à 1,5 mole d'urée par mole de motifs phénol présents,
C) on neutralise partiellement le mélange réactionnel,
D) on additionne le mélange réactionnel partiellement neutralisé de 0 a 0,5 mole de phénol par mole de motifs phénol présents et de 0,1 à 0,8 mole de formaldéhyde par mole des motifs phénol présents après cela,
E) on post-condense à une temperature de 40 à 90°C,
F) on déplace dans la gamme neutre le pH du mélange réactionnel et
G) on acidifie ensuite avec un acide faible.

2. Procedé de préparation de produits de condensation selon la revendication 1, caractérisé en ce qu'on exécute l'étape A en chauffant le phénol avec de l'acide sulfurique concentré, avec un oléum ayant une teneur en SO₃ de 20 à 65% en poids ou avec un mélange d'acide sulfurique et d'oléum ayant une teneur en SO₃ de 20 à 65% en poids, pendant 1 à 10 h à une temperature de 100 à 180°C, le rapport molaire du phénol à l'acide sulfurique total, calculé en tant qu'anhydride sulfurique, s'élevant à 1-1,2:1.

3. Procédé de préparation de produits de condensation selon la revendication 2, caractérisé en ce que, dans l'étape A, on conduit la réaction avec un oléum ayant une teneur en SO₃ de 20 à 32% en poids, à une température de 150 a 180°C.

4. Procédé de préparation de produits de condensation selon l'une quelconque des revendications 1 à 3, caractérise en ce que le rapport molaire des acides phénolmonosulfoniques aux dihydroxydiphénylsulfones se situe dans la gamme de 3,5:1 à 5:1.

5. Procedé de préparation de produits de condensation selon l'une quelconque des revendications 1 à 4, caractérise en ce que la quantité durée ajoutée dans l'étape B par mole de motifs phénol présents est comprise entre 0,6 et 1 mole.

6. Procédé de préparation de produits de condensation selon l'une quelconque des revendications 1 à 5, caractérise en ce que la quantite de formaldéhyde ajoutée dans l'étape B par mole de motifs phénol présents est comprise entre 1,4 et 1,8 mole.

7. Procédé de préparation de produits de condensation selon l'une quelconque des revendications 1 à 6, caractérise en ce que, dans l'étape B, on condense à une température de 50 a 60°C pendant 0,5 à 3 h.

8. Procedé de préparation de produits de condensation selon l'une quelconque des revendications 1 à 7, caractérisé en ce que, dans l'étape C, on effectue la neutralisation partielle en élevant le pH jusqu'à une valeur à laquelle l'addition de 0,05 à 0,08 g d'hydroxyde de sodium, par gramme de mélange réactionnel, produirait une nouvelle élévation du pH à une valeur de 7.

9. Procédé de préparation de produits de condensation selon l'une quelconque des revendications 1 à 8, caractérisé en ce qu'on n'ajoute pas de phénol dans l'étape D.

10. Procédé de préparation de produits de condensation selon l'une quelconque des revendications 1 à 8, caractérisé en ce que, dans l'étape D, on ajoute 0,2 à 0,4 mode de phénol par mode de motifs phénol présents.

11. Procédé de préparation de produits de condensation selon l'une quelconque des revendications 1 à 10, caractérisé en ce que, dans l'étape D, on ajoute 0,1 à 0,4 mode de formaldéhyde par mode de motifs phénol présents.

12. Procéde de préparation de produits de condensation selon l'une quelconque des revendications 1 à 11, caractérisé en ce que, dans le cas où il n'a pas été ajoute de phénol dans l'étape D, on poursuit la post-condensation jusqu'à ce que la viscosité dynamique du mélange réactionnel, mesurée à 50°C avec un viscosimètre rotatif de la firme Brookfield, Type LVT, numéro de broche LV2, à une vitesse de 12 tr/mn, dans un becher de 400 ml ayant un diamètre de 80 mm, ait atteint une valeur de 300 à 350 mPa.s.

13. Procédé de préparation de produits de condensation selon l'une quelconque des revendications 1 à 12, caractérisé en ce que, dans de cas où du phénol a été ajouté dans l'étape D, on poursuit la post-condensation jusqu'à ce que la viscosité dynamique du mélange réactionnel, mesurée à 50°C avec un viscosimètre rotatif de la firme Brookfield, Type LVT, numéro de broche LV2, à une vitesse de 12 tr/mn, dans un becher de 400 ml ayant un diamètre de 80 mm, ait atteint une valeur de 1000 à 4000 mPa.s.

14. Procédé de préparation de produits de condensation selon l'une quelconque des revendications 1 à 13, caractérisé en ce que, dans l'étape F, on déplace le pH dans la gamme de 6 à 8.

15. Procédé de préparation de produits de condensation selon l'une quelconque des revendications 1 à 14, caractérisé en ce que, dans l'étape G, on abaisse le pH à une valeur de 3 à 4.

16. Procédé de préparation de produits de condensation selon d'une quelconque des revendications 1 à 15, caractérise en ce que, dans l'étape G, on utilise pour l'acidification un acide polycarboxylique de poids moléculaire élevé, soluble dans l'eau, ayant sa pleine acidité ou partiellement neutralise.

17. Procédé de préparation de produits de condensation selon l'une quelconque des revendications 1 à 16, caractérisé en ce qu'à la suite de d'étape G, on met le mélange aqueux sous la forme solide par un procédé de séchage.

18. Procédé de préparation de produits de condensation selon l'une quelconque des revendications 1 à 17, caractérisé en ce que, dans le cas d'une addition de phénol dans l'étape D, les étapes D à F sont réunies et exécutées en cascade.

19. Procédé de tannage de peaux d'animaux, caractérisé en ce qu'on utilise à cette fin des produits de condensation selon l'une quelconque des revendications 1 à 18.

20. Procédé de retannage en blanc de cuirs, caractérisé en ce qu'on utilise à cette fin des produits de condensation selon l'une quelconque des revendications 1 à 18.
